# EUROPÄISCHE PATENTSCHRIFT

(11) **EP 4 201 638 B1**
(45) Veröffentlichungstag und Bekanntmachung des Hinweises auf die Patenterteilung: **06.11.2024**
(21) Anmeldenummer: 22165267.0
(22) Anmeldetag: 29.03.2022
(51) Int. Cl.: B29C 49/48, B29C 49/62, B29C 49/06, B29K 67/00, B29L 31/00

(54) **BLASFORM ZUM UMFORMEN VON KUNSTSTOFFVORFORMLINGEN ZU KUNSTSTOFFBEHÄLTNISSEN MIT LUFTABFÜHRUNG SOWIE BODENTEIL FÜR EINE BLASFORM**
BLOW MOULD FOR FORMING PLASTIC PREFORMS INTO PLASTIC CONTAINERS WITH AIR OUTLET AND BOTTOM PART FOR A BLOW MOULD
MOULE DE SOUFFLAGE PERMETTANT DE FORMER DES PRÉFORMES EN MATIÈRE PLASTIQUE POUR OBTENIR DES RÉCIPIENTS EN MATIÈRE PLASTIQUE POURVUS DE SORTIE D'AIR, AINSI QUE PARTIE DE FOND POUR UN MOULE DE SOUFFLAGE

(30) Priorität: 21.12.2021 DE 102021134057
(43) Veröffentlichungstag der Anmeldung: 28.06.2023
(73) Patentinhaber: Krones AG, 93073 Neutraubling (DE)
(72) Erfinder: Tissmer, Bastian, 93073 Neutraubling (DE); Knapp, Peter, 93073 Neutraubling (DE)
(74) Vertreter: Hannke Bittner & Partner mbB Regensburg

(56) Entgegenhaltungen:
- DE-A1- 102013 226 906
- US-A1- 2015 061 196
- US-A1- 2016 325 483
- US-A1- 2016 332 356
- US-A1- 2017 173 845
- US-A1- 2018 043 605

## Beschreibung

Die vorliegende Erfindung bezieht sich auf eine Blasform zum Umformen von Kunststoffvorformlingen zu Kunststoffbehältnissen mit Luftabführung sowie auf ein Bodenteil für eine Blasform. Dabei werden üblicherweise erwärmte Kunststoffvorformlinge in eine Blasform eingebracht, welche einen Hohlraum ausbildet, der zur Expansion der Kunststoffvorformlinge zu den Kunststoffbehältnissen dient. Innerhalb dieses Hohlraums werden die Kunststoffvorformlinge üblicherweise mit einem fließfähigen Medium, wie insbesondere Druckluft oder dem abzufüllenden Produkt, gegen eine Innenwandung dieser Blasformteile beaufschlagt und so zu den Kunststoffbehältnissen geformt. Diese Innenwandung weist dabei die Kontur des herzustellenden Kunststoffbehältnisses auf.

Weitere gattungsgemäße Blasformen und Bodenteilen sind in den Patentschriften DE102013226906A1, US2017/173845A1, US2016/332356A1, US2018/043605A1, US2015/061196A1 und US2016/325483A1 beschrieben.

Der Fertigblasdruck, d.h. der Druck, mit dem der Kunststoffvorformling vollständig ausgeformt wird, ist dabei wesentlich für den Energiebedarf des Blasformvorgangs, so dass dieser möglichst gering sein sollte. Entscheidend für die Höhe des Fertigblasdrucks ist dabei insbesondere die Ausprägung der letzten Ecken des Behältnisses, insbesondere in den Füßchen bzw. dem Standbereich, in welchen sich bei der Umformung zwischen dem Kunststoffvorformling und der Blasforminnenseite, der Behälterkontur, zu welcher auch die Bodentasse bzw. Bodenform mit der Kontur des Behälterbodens gehört, Gegendruck sammelt.

Um diesen Gegendruck zu entlasten, weist das Bodenteil der Blasform Entlüftungsöffnungen auf. Der Gegendruck wird dabei insbesondere durch die Formtrennspalte der beiden Seitenteile der Blasform, dem Formtrennspalt zwischen den beiden Seitenteilen und dem Bodenteil, sowie den Entlüftungsöffnungen in dem Bodenteil entlüftet. Wenn der Kunststoffvorformling so weit aufgeblasen bzw. umgeformt ist, dass sich die entwickelnde Blase des Kunststoffvorformlings in dem Bodenteil befindet, kann die Entlüftung in dem Bodenteil nur noch über die Entlüftungsöffnungen erfolgen.

Erfolgt hier keine oder nur eine unzureichende Entlüftung, muss der Fertigblasdruck entsprechend hoch sein. Die Öffnungen in dem Bodenteil begrenzen demnach den abfließenden Volumenstrom derart, dass insbesondere bei vergleichsweise großen Bodenteildurchmessern ein entsprechend höherer Fertigblasdruck notwendig ist, da alle Bodenteile unabhängig von ihrem Durchmesser bzw. ihrer Fläche die gleiche Anzahl und Größe von Öffnungen aufweisen.

Bei einer internen Untersuchung der Anmelderin der Reduzierung des Fertigblasdrucks beim Streckblasen von Kunststoffbehältern bei verschiedenen Volumina wurde festgestellt, dass sich der Blasdruck bei den kleineren Behältern leichter reduzieren lässt als bei den größeren. Es wurde außerdem festgestellt, dass das "Entlüftungsbohrbild" unabhängig von den Bohrungsdurchmesser gleichbleibt und nur an die Geometrie der Kontur der (Stand)Füße angepasst wird. Das bedeutet, dass beispielsweise ein Mehrfußboden mit 5 Füssen bei einem Flaschendurchmesser von 50 mm bis zu einem Flaschendurchmesser von 200 mm, oder mehr, immer die gleiche Oberfläche bei den Entlüftungsbohrungen hat. Die Oberfläche der Bodengeometrie nimmt allerdings mit dem Durchmesser und der Bodenhöhe zu.

Aus dem internen Stand der Technik der Anmelderin ist es demnach bekannt, dass in dem Bodenteil einer Blasform, welches insbesondere die Standfüße des Behältnisses ausbildet, eine Anzahl von Löchern bzw. Bohrungen oder Schlitzen zur Entlüftung von Mehrfußböden (mehrere Bereiche zur Ausbildung von Standfüßen an dem Behältnis) bzw. Petaloidböden vorhanden sind. Im internen Stand der Technik der Anmelderin sind dabei beispielsweise pro Fuß acht Bohrungen mit 1 mm und zwei Bohrungen mit 0,8 mm vorhanden. Somit kommt man bei einem Boden mit fünf Füßen (Petaloidboden) auf eine Gesamtanzahl von 40 Bohrungen mit 1 mm und zehn Bohrungen mit 0,8 mm und demnach insgesamt 50 Bohrungen.

Dabei ist es nachteilig, dass die bekannten Bodenteile für Mehrfußböden bzw. Petaloidböden unabhängig von ihrem Durchmesser alle die gleiche Anzahl an Entlüftungsbohrungen aufweisen. Insbesondere bei Bodenteilen mit größerem Durchmesser, insbesondere Durchmessern von > 65 mm, ist daher ein höherer Fertigblasdruck notwendig bzw. die Entlüftung ist schlechter als bei Bodenteilen mit kleinerem Durchmesser.

Der vorliegenden Erfindung liegt daher die Aufgabe zugrunde, die Entlüftung der Blasform zu verbessern bzw. unabhängig von dem Durchmesser und damit der Größe des Bodenteils eine ausreichende Entlüftung sicherzustellen. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Die Erfindung ist daher auf eine Blasform zum Umformen von Kunststoffvorformlingen zu Kunststoffbehältnissen gerichtet, mit wenigstens zwei Blasformseitenteilen und einem Bodenteil, welche einen Hohlraum ausbilden, innerhalb dessen Kunststoffvorformlinge durch Beaufschlagung mit einem fließfähigen Medium zu den Kunststoffbehältnissen umformbar sind, wobei eine den Hohlraum begrenzende Innenwandung der Blasformseitenteile und des Bodenteils eine Kontur aufweist, welche eine vorgegebene Gestalt der herzustellenden Behältnisse erzeugt, wobei in wenigstens einem Abschnitt des Bodenteils eine Vielzahl von Öffnungen vorgesehen ist, welche ein Abführen eines gasförmigen Mediums während eines Expansionsvorgangs des Behältnisses ermöglichen.

Erfindungsgemäß liegt ein Verhältnis zwischen einer Oberfläche des Bodenteils und einer Oberfläche der Öffnungen bei 3 - 350, bevorzugt bei 4 - 200 und besonders bevorzugt bei 5 -100.

Vorteilhaft liegt das Verhältnis zwischen einer Oberfläche des Bodenteils und einer Oberfläche der Öffnungen bei 25 - 180, bevorzugt bei 35 - 175 und besonders bevorzugt bei 47 - 169. Das bevorzugte bzw. vorteilhafte Verhältnis hängt dabei insbesondere von der Größe der Flasche bzw. dem Flaschenvolumen und der Form der Öffnungen ab.

Beispielsweise wird bei einem Flaschenvolumen von 0,5 l ein Verhältnis zwischen einer Oberfläche des Bodenteils und einer Oberfläche der Öffnungen, bei welchen es sich bevorzugt um Löcher oder Bohrungen handelt von 169 bevorzugt. Vorteilhaft liegt bei diesem Beispiel das Verhältnis dabei zwischen einer Oberfläche des Bodenteils und einer Oberfläche der Öffnungen bei 145 - 180, bevorzugt bei 150 - 175 und besonders bevorzugt bei 155 - 173.

Es wird demnach erfindungsgemäß vorgeschlagen, dass das Verhältnis zwischen den Oberflächen von Öffnungen und Bodenteil, unabhängig von dem Durchmesser des Bodenteils immer annähernd gleich ist d.h., dass mit einem größeren Durchmesser entsprechend auch die Oberfläche, welche die Öffnungen einnehmen größer ist. Dies kann beispielsweise durch, im Vergleich zu einem kleineren Durchmesser des Bodenteils, mehrere Öffnungen oder auch größere Öffnungen erreicht werden. Hierdurch kann bei jeder Blasform- bzw. Behältnisgröße eine ausreichende Entlüftung sichergestellt werden.

Unter der Oberfläche der Öffnungen wird dabei die Fläche verstanden, welche die Öffnungen in Form von Löchern, Schlitzen oder anderen beliebigen Formen auf dem Bodenteil einnehmen bzw. aufweisen.

Es wurde bei internen Untersuchungen der Anmelderin festgestellt, dass das Verhältnis zwischen Oberfläche der Bodengeometrie und der Oberfläche der Öffnungen und insbesondere Entlüftungsöffnungen bzw. Entlüftungsbohrungen einen Einfluss auf die Entlüftung hat.

Die folgende Tabelle zeigt die Verhältnisse für die Durchmesser von 50 mm bis 125 mm bei einem Flaschenvolumen von 0,5 l und Öffnungen in Form von Löchern. Es ist zu erkennen, dass die Verhältnisse, bei gleichbleibender Anzahl und Durchmesser der Bohrungen bzw. Öffnungen, mit zunehmendem Bodendurchmesser immer größer werden.

| Boden-dutchmesser mm: | Halbkugel- oberfläche Boden m²: | Bohrungs- durchmesser mm: | Anzahl Bohrungen pro Fuß | Bohrungoberfläche mm²: | Anzahl Bohrungen pro Boden | Bohrung- oberfläche pro Boden m²: | Verhältnis Bohrungs- zu Boden- oberfläche |
|---|---|---|---|---|---|---|---|
| 50,00 | 0,0039 | 1,00 | 10 | 0,7854 | 50 | 0,000039 | 100 |
| 64,00 | 0,0064 | 1,00 | 10 | 0,7854 | 50 | 0,000039 | 163,84 |
| 65,00 | 0,0066 | 1,00 | 10 | 0,7854 | 50 | 0,000039 | 169 |
| 66,00 | 0,0068 | 1,00 | 10 | 0,7854 | 50 | 0,000039 | 174,24 |
| 67,00 | 0,0071 | 1,00 | 10 | 0,7854 | 50 | 0,000039 | 179,56 |
| 68,00 | 0,0073 | 1,00 | 10 | 0,7854 | 50 | 0,000039 | 184,96 |
| 69,00 | 0,0075 | 1,00 | 10 | 0,7854 | 50 | 0,000039 | 190,44 |
| 70,00 | 0,0077 | 1,00 | 10 | 0,7854 | 50 | 0,000039 | 196 |
| 80,00 | 0,0101 | 1,00 | 10 | 0,7854 | 50 | 0,000039 | 256 |
| 90,00 | 0,0127 | 1,00 | 10 | 0,7854 | 50 | 0,000039 | 324 |
| 100,00 | 0,0157 | 1,00 | 10 | 0,7854 | 50 | 0,000039 | 400 |
| 110,00 | 0,0190 | 1,00 | 10 | 0,7854 | 50 | 0,000039 | 484 |
| 120,00 | 0,0226 | 1,00 | 10 | 0,7854 | 50 | 0,000039 | 576 |
| 125,00 | 0,0245 | 1,00 | 10 | 0,7854 | 50 | 0,000039 | 625 |

Bei den internen Untersuchungen und Versuchen der Anmelderin hat sich gezeigt, dass, ausgehend von diesem Beispiel, ein Kunststoffbehältnis mit einem Durchmesser von 65 mm sehr gute Fertigblasdruckergebnisse erzielt hat. Es wurde daher das Verhältnis zwischen der Oberfläche der Bodengeometrie und der Oberfläche der Entlüftungsöffnungen für einen Versuchsbehälter mit einem Durchmesser von 100 mm auf das Verhältnis des Behälterdurchmessers von 65 mm angepasst.

Hierzu muss, wie aus der Tabelle hervorgeht, das Verhältnis von 400 auf ca. 169 reduziert werden, d.h. die Oberfläche der Entlüftungsöffnungen muss verändert werden und insbesondere vergrößert werden, und zwar von 0,000039 m² (39 mm²) auf 0,000094 m² (94 mm²).

Um die Fläche der Entlüftungsöffnungen zu verändern und insbesondere wie im beschriebenen Beispiel zu vergrößern, gibt es verschiedene Möglichkeiten. Bevorzugt kann hierzu der Bohrungsdurchmesser der Öffnungen vergrößert werden oder die Anzahl der Entlüftungsöffnungen erhöht werden. Auch die Verwendung einer Kombination aus verschiedenen Öffnungsdurchmessern oder eine quadratische Geometrie oder eine rechteckige Geometrie oder Kombinationen aus Bohrungen mit rechteckigen Geometrien z.B. Schlitze wäre bevorzugt denkbar. Da jeder Fuß bzw. Standbereich des Bodenteils zwei Flanken aufweist, sollte bevorzugt, um eine symmetrische Aufteilung zu erhalten, immer eine Gerade Zahl an den Entlüftungsbohrungen pro Fuß vorhanden sein.

Bei einem Bodendurchmesser von 50 mm ist für ein Verhältnis von 169 zwischen einer Oberfläche des Bodenteils und einer Oberfläche der Öffnungen beispielsweise eine Bohrungsoberfläche von 0,000023 m² (23 mm²) notwendig und für einen Bodendurchmesser von 125 mm eine Bohrungsoberfläche von 0,000145 m² (145 mm²).

Wie erwähnt, ist es aus dem internen Stand der Technik der Anmelderin bekannt, dass bei einem Bodenteil mit fünf Füßen, jeder Fuß bevorzugt zehn Öffnungen aufweist.

Für einen Bodendurchmesser von 100 mm, mit einem gewünschten Verhältnis von 169, bedeutet dies, dass anstelle von zehn Entlüftungsöffnungen beispielswiese 24 Entlüftungsöffnungen pro Fuß bzw. insgesamt 120 Öffnungen anstelle von 50 Öffnungen mit einem Durchmesser von 1 mm vorgesehen werden müssen, oder anstelle von zehn Entlüftungsöffnungen mit einem Durchmesser von 1 mm, zehn Entlüftungsöffnungen mit einem Durchmesser von 1,5 mm, oder die Anordnung von Öffnungen mit unterschiedlichen Durchmessern und daher anstelle von zehn Entlüftungsöffnungen mit einem Durchmesser von 1 mm, acht Entlüftungsöffnungen mit einem Durchmesser von 1 mm und eine Entlüftungsöffnung mit einem Durchmesser von 4 mm.

Die Bohrungen bzw. Öffnungen sind dabei bevorzugt derart zu gestalten, dass diese einerseits groß genug sind, um eine Entlüftung zu ermöglichen bzw. einen ausreichend großen Strömungsquerschnitt zu erlauben, jedoch noch so klein, so dass kein Material des Kunststoffbehältnisses während der Umformung in die Öffnungen hineingedrückt wird und sich auch keine sicht- und/oder spürbaren Bereiche auf dem fertigen Kunststoffbehältnis ausbilden.

Bevorzugt münden die Öffnungen in Kanäle, welche sich durch die Wandung der Blasform und des Bodenteils hindurch erstrecken, so dass bevorzugt eine Abführung des fließfähigen Mediums aus der Blasform über die Kanäle erfolgt. Demnach schließen sich bevorzugt an die Öffnungen innerhalb einer Wandung der Blasformteile und insbesondere des Bodenteils Kanäle an, welche zur Abführung des gasförmigen Mediums dienen. Vorteilhaft erstrecken sich diese Kanäle wenigstens teilweise durch die Wandung des Bodenteils hindurch. Bevorzugt stellen die Kanäle eine Strömungsverbindung zwischen einer Außenwand des Bodenteils und einer Innenwand des Bodenteils her und damit bevorzugt auch zwischen einem Innenraum der Blasform und einem Außenraum der Blasform.

Bei einer bevorzugten Ausführungsform liegt ein Durchmesser des Bodenteils zwischen 50 mm und 200 mm und die Oberfläche der Öffnungen zwischen 23 mm² und 500 mm² und/oder die Oberfläche des Bodenteils zwischen 3900 mm² und 65000 mm² und die Oberfläche der Öffnungen zwischen 23 mm² und 500 mm². Vorteilhaft sind dabei Kombinationen von Durchmesser des Bodenteils, Oberfläche der Öffnungen und Oberfläche des Bodenteils, welche ein Verhältnis zwischen Oberfläche der Öffnungen und Oberfläche des Bodenteils von bevorzugt 160 - 175 und besonders bevorzuge nahezu 169 ergeben, da ein derartiges Verhältnis den geringsten Druckluftverbrauch bei größtmöglicher Behälterqualität sicherstellt. Dieses Verhältnis ist dabei insbesondere vorteilhaft für Flaschenvolumen von 0,5 l und der Ausbildung der Öffnungen als Löcher.

Bei einer weiteren bevorzugten Ausführungsform handelt es sich bei den Öffnungen um eine Vielzahl von Löchern und/oder Schlitzen, welche in dem Bodenteil und insbesondere den Bereichen des Bodenteils, welche zur Ausbildung der Standbereiche des fertigen Behältnisses dienen, angeordnet ist. Bevorzugt ist dabei auch eine Kombination aus Schlitzen und Löchern.

Sind die Öffnungen beispielsweise als Schlitze ausgeführt liefert ein Verhältnis von 169 zwar weiterhin zufriedenstellende Ergebnisse, allerdings lässt sich die Flaschenqualität bei einem Verhältnis bis 47 weiter vorteilhaft verbessern, so dass das Verhältnis zwischen der Oberfläche der Öffnungen und der Oberfläche des Bodenteils, wenn die Öffnungen als Schlitze ausgebildet sind, bevorzugt bei 40 - 180, bevorzugt bei 45 - 170 und besonders bevorzugt bei 47 - 169 liegt.

Sind die Öffnungen als eine Kombination aus Schlitzen und Löchern ausgebildet liegt das Verhältnis zwischen der Oberfläche der Öffnungen und der Oberfläche des Bodenteils bevorzugt bei 30 - 50, bevorzugt bei 33 - 45 und besonders bevorzugt bei 35 - 41.

Die Löcher können dabei bevorzugt geordnet entlang von wenigstens einer und bevorzugt wenigstens zwei gedachten geometrischen Linien angeordnet sein. Denkbar ist bevorzugt aber auch eine ungeordnete Anordnung der Löcher, beispielswiese gezielt in Bereichen, in welchen die Standbereiche des Behältnisses schwer ausgebildet werden können, wie beispielsweise sehr enge oder kleine Bereiche.

Bevorzugt kann ein Schlitz auch durch eine Anordnung einer Vielzahl von Löchern bzw. Bohrungen ausgebildet werden, welche bevorzugt entlang einer Reihe oder eines Splines angeordnet sind. Eine Vielzahl von Löchern erstreckt sich dabei bevorzugt entlang wenigstens einer geometrischen Linie. Bevorzugt werden die Löcher dabei entlang zweier oder mehrerer Reihen nebeneinander angeordnet, sodass sich wenigstens zwei Reihen von Löchern nebeneinander entlang geometrischer Linien erstrecken. Die Anzahl der Löcher der Entlüftungsbohrungen in dem Bodenteil ist dabei bevorzugt wieder abhängig von der benötigten oder gewünschten Entlüftungsbohrungsoberfläche im Verhältnis zur Oberfläche des Bodenteils.

Die Löcher der einzelnen Reihen können bevorzugt direkt nebeneinander auf gleicher Höhe angeordnet sein oder versetzt zueinander. Die Löcher weisen bevorzugt einen Durchmesser von bevorzugt 0,2 mm bis 7 mm, bevorzugt 0,3 mm bis 5 mm und besonders bevorzugt von 0,5 mm bis 4 mm auf. Die Abstände der einzelnen Löcher in einer Reihe zueinander sind bevorzugt gleich oder unterschiedlich. Bevorzugt liegt der Abstand bei 0,6xbis 2,5x dem Durchmesser der Löcher und besonders bevorzugt bei 0,5x bis 2x dem Durchmesser der Löcher.

An einer Außenseite der Bodenform werden die Öffnungen und insbesondere die entlang einer Reihe angeordnete Vielzahl von Löchern bevorzugt innerhalb eines Kanals geführt, um das gasförmige Medium schneller aus der Bodenform abzuführen. Der Kanal weist dabei, bezogen auf einen Durchmesser der Löcher, eine bevorzugt vielfache Breite auf.

Bevorzugt weist jeder Abschnitt eines Bodenteils ein spezifisches Bohrbild auf. Das Bohrbild in einem Fuß und/oder einem Abschnitt des Bodenteils kann bevorzugt aus einer Anordnung mehrerer Zeilen und Spalten bestehen. Bevorzugt ist das Bohrbild mittig innerhalb des Abschnitts des Bodenteils angeordnet. Die Löcher bzw. Entlüftungsbohrung weisen dabei bevorzugt alle den gleichen Durchmesser auf oder unterschiedliche Durchmesser. Bei unterschiedlichen Durchmessern stehen die Durchmesser bevorzugt in einem Verhältnis zwischen 0,25 und 10, bevorzugt zwischen 0,4 und 8 und besonders bevorzugt zwischen 0,5 und 6 zueinander. Auch hier ist die Anzahl der Löcher der Entlüftungsbohrungen in dem Bodenteil bevorzugt wieder abhängig von der benötigten oder gewünschten Entlüftungsbohrungsoberfläche im Verhältnis zur Oberfläche des Bodenteils.

In einer weiteren bevorzugten Ausführungsform ist das Bodenteil zur Ausbildung von Standfüßen des Kunststoffbehältnisses ausgebildet, wobei jeder Standfuß eine Vielzahl von Öffnungen aufweist. Bevorzugt sind dabei in dem Bodenteil drei bis zwölf Standbereiche zur Ausbildung von drei bis zwölf Standfüßen des Kunststoffbehältnisses angeordnet.

Die Öffnungen sind demnach bevorzugt in einem Bereich des Bodenteils angeordnet, der zur Ausbildung von Standbereichen des Behältnisses dient. Bevorzugt sind die Öffnungen daher in gekrümmten Abschnitten des Bodenteils angeordnet.

In einer bevorzugten Ausführungsform weist jeder Standfuß bzw. jeder zur Ausbildung von Standbereichen des Behältnisses dienende Bereich des Bodenteils 7 - 35 Öffnungen, bevorzugt 8 - 30 Öffnungen und besonders bevorzugt 10 - 25 Öffnungen auf. Insgesamt weist ein Bodenteil mit fünf Standbereichen demnach 35 - 175 Öffnungen, bevorzugt 40 - 150 Öffnungen und besonders bevorzugt 50 - 125 Öffnungen auf.

Bei einer weiteren bevorzugten Ausführungsform weist wenigstens ein Loch einen Durchmesser auf, der zwischen 0,5 mm und 4 mm, bevorzugt zwischen 0,8 mm und 2 mm liegt. Besonders bevorzugt sollten, um eine zu starke Ausprägung der Entlüftungsöffnungen an Sichtflächen oder Funktionsfläche am Boden zu vermeiden, die Durchmesser der Öffnungen nicht größer sein als 2 mm, und nicht kleiner als 0,8 mm. An anderen Stellen können die Öffnungen bevorzugt bis zu 5 mm groß sein, um ein schnelles Entlüften zu realisieren.

Bevorzugt ist ein Abstand zwischen zwei nebeneinander angeordneten Öffnungen kleiner als 4 mm, bevorzugt kleiner als 3 mm und bevorzugt kleiner als 2 mm. Insbesondere muss dabei genügend Material zwischen zwei nebeneinander gelegenen Öffnungen und insbesondere Löchern oder Bohrungen sein, so dass diese nicht ineinanderlaufen bzw. ineinander übergehen. Der minimale Abstand zwischen zwei Bohrungen, von Bohrungsrand zu Bohrungsrand ist, ist dabei bevorzugt 0,2 mm. Der Abstand zwischen zwei nebeneinander angeordneten Öffnungen und insbesondere Löchern ist demnach bevorzugt zwischen 0,5 mm und 4 mm, bevorzugt zwischen 0,4 mm und 3 mm und besonders bevorzugt zwischen 0,2 mm und 2 mm.

In einer weiteren bevorzugten Ausführungsform weist wenigstens ein Schlitz eine Breite auf, die zwischen 0,4 mm und 2 mm, bevorzugt zwischen 0,5 mm und 1 mm und besonders bevorzugt zwischen 0,6 mm und 0,8mm liegt. Die Schlitze werden dabei bevorzugt durch Drahterodieren, Fräsen, Senkerodieren oder Laserschneiden an dem Bodenteil angeordnet. Je nach Schnitt- bzw. Schlitzbreite kann dabei ein rechteckiger Querschnitt erstellt werden.

Bevorzugt weist jeder Standbereich bzw. jeder Bereich des Bodenteils, welcher zur Ausbildung von Standbereichen des Kunststoffbehältnisses dient, zwischen ein bis vier Schlitzen auf.

Denkbar ist bevorzugt auch eine Kombination aus Löchern und Schlitzen in dem Bodenteil, wobei die Löcher bevorzugt jeweils an den Enden der Schlitze bzw. des jeweiligen Schlitzes ausgebildet sind. Dies führ zu einer Verringerung der Spannungen in den Schlitzen. Ein Schlitz verläuft demnach bevorzugt von Bohrung zu Bohrung. Bevorzugt sind in jedem Standfuß des Bodenteils zehn Bohrungen und zwei Schlitze ausgebildet. Bevorzugt können aber auch als zehn Bohrungen oder weniger als zehn Bohrungen in einem Standfuß vorhanden sein.

Die vorliegende Erfindung ist weiter auch auf ein Bodenteil für eine Blasform zum Umformen von Kunststoffvorformlingen zu Kunststoffbehältnissen gerichtet, wobei das Bodenteil eine Innenwandung mit einer Kontur aufweist, welche eine vorgegebene Bodengestalt der herzustellenden Behältnisse erzeugt, wobei in wenigstens einem Abschnitt des Bodenteils eine Vielzahl von Öffnungen vorgesehen ist, welche ein Abführen eines gasförmigen Mediums während eines Expansionsvorgangs des Behältnisses ermöglichen.

Erfindungsgemäß liegt dabei ein Verhältnis zwischen einer Oberfläche des Bodenteils und einer Oberfläche der Öffnungen bei 3 - 350, bevorzugt bei 4 - 200 und besonders bevorzugt bei 5 - 100.

Weitere Vorteile und Ausführungsformen ergeben sich aus den beigefügten Zeichnungen. Darin zeigt:
- Fig. 1: eine grob schematische Darstellung einer Vorrichtung zum Umformen von Kunststoffvorformlingen zu Kunststoffbehältnissen;
- Fig. 2: eine Darstellung einer Blasstation mit Blasform zum Umformen von Kunststoffvorformlingen zu Kunststoffbehältnissen;
- Fig. 3: eine schematische Darstellung eines erfindungsgemäßen Bodenteils mit Entlüftungslöchern;
- Fig. 4: eine weitere schematische Darstellung eines erfindungsgemäßen Bodenteils mit Entlüftungslöchern;
- Fig. 5: eine weitere schematische Darstellung eines erfindungsgemäßen Bodenteils mit Entlüftungslöchern;
- Fig. 6: eine weitere schematische Darstellung eines erfindungsgemäßen Bodenteils mit Entlüftungslöchern;
- Fig. 7: eine schematische Darstellung eines erfindungsgemäßen Bodenteils mit Schlitzen;
- Fig. 8: eine weitere schematische Darstellung eines erfindungsgemäßen Bodenteils mit Schlitzen;
- Fig. 9: eine weitere schematische Darstellung eines erfindungsgemäßen Bodenteils mit Schlitzen;
- Fig. 10: eine schematische Darstellung eines erfindungsgemäßen Bodenteils mit einer Kombination aus Entlüftungslöchern und Schlitzen;
- Fig. 11: eine weitere schematische Darstellung eines erfindungsgemäßen Bodenteils mit einer Kombination aus Entlüftungslöchern und Schlitzen;
- Fig. 12: eine weitere schematische Darstellung eines erfindungsgemäßen Bodenteils mit einer Kombination aus Entlüftungslöchern und Schlitzen;
- Fig. 13: eine weitere schematische Darstellung eines erfindungsgemäßen Bodenteils mit einer Kombination aus Entlüftungslöchern und Schlitzen;
- Fig. 14: eine weitere schematische Darstellung eines erfindungsgemäßen Bodenteils;
- Fig. 15: eine weitere schematische Darstellung eines erfindungsgemäßen Bodenteils;
- Fig. 16: eine Außenansicht des in Fig. 14 dargestellten Bodenteils;
- Fig. 17: eine Schnittdarstellung des in Fig. 14 dargestellten Bodenteils;
- Fig. 18: eine weitere schematische Darstellung eines erfindungsgemäßen Bodenteils;
- Fig. 19: eine Außenansicht des in Fig. 18 dargestellten Bodenteils;
- Fig. 20: eine schematische Darstellung einer Anordnung von Löchern in Reihe;
- Fig. 21: ein beispielhaftes Bohrbild eines Abschnitts des Bodenteils;
- Fig. 22: ein weiteres beispielhaftes Bohrbild eines Abschnitts des Bodenteils;
- Fig. 23-26: weitere beispielhafte Bohrbilder eines Abschnitts des Bodenteils.

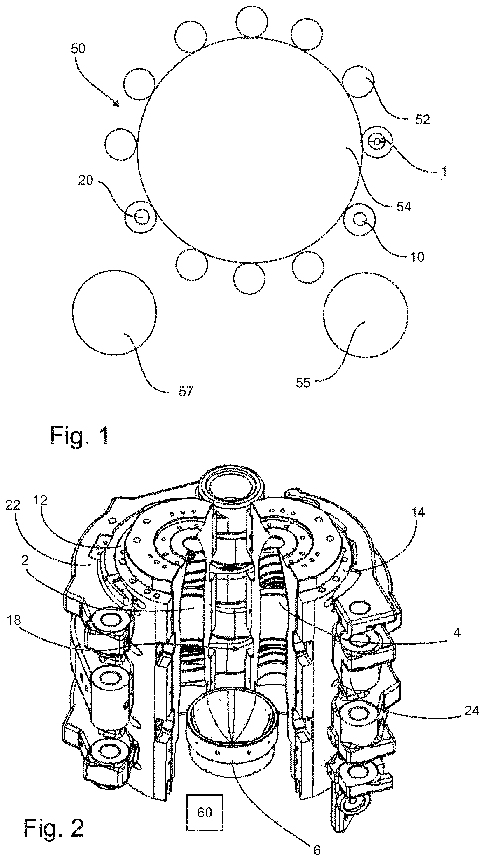

Fig. 1 zeigt eine grob schematische Darstellung einer erfindungsgemäßen Vorrichtung zum Umformen von Kunststoffvorformlingen 10 zu Kunststoffbehältnissen 20. Dabei werden die Kunststoffvorformlinge 10 über eine Zuführeinrichtung 55, wie etwa einem Zuführstern, zugeführt und die fertigen Behältnisse werden der Umformungseinrichtung 50 über eine Abführeinrichtung, wie einen Abführstern 57, entnommen. Die Umformungseinrichtung 50 weist einen drehbaren Träger 54 auf, an dem eine Vielzahl von Umformungsstationen 52 angeordnet ist. Dabei weist jede dieser Umformungsstationen 52 jeweils eine Blasform 1 auf.

Fig. 2 zeigt eine schematische Ansicht einer erfindungsgemäßen Blasform. Diese Blasform weist hier zwei Seitenteile 2, 4 auf sowie ein Bodenteil 6 auf. Gemeinsam bilden diese beiden Seitenteile und das Bodenteil 6 einen Hohlraum 18 aus, innerhalb dessen die Kunststoffvorformlinge zu den Kunststoffbehältnissen expandiert werden. Die oben beschriebenen Entlüftungsöffnungen befinden sich dabei insbesondere in dem Bodenteil, sie können jedoch auch in den Seitenteilen vorgesehen sein, beispielsweise, um komplizierte Wölbungen des Kunststoffbehältnisses besser ausbilden zu können. Die Bezugszeichen 12, 14 beziehen sich auf Trägerschalen, welche die Seitenteile 2, 4 tragen und die Bezugszeichen 22, 24 auf Blasformträger, an denen jeweils die Seitenteile (über die Trägerschalen 12, 14) befestigt sind.

Das Bezugszeichen 60 bezieht sich auf eine nur schematisch dargestellte Unterdruckerzeugungseinrichtung. Diese kann dabei so gesteuert sein, dass sie während eines vorgegebenen Zeitraums während der Expansion der Kunststoffvorformlinge Luft aus dem Innenraum der Blasform abzieht.

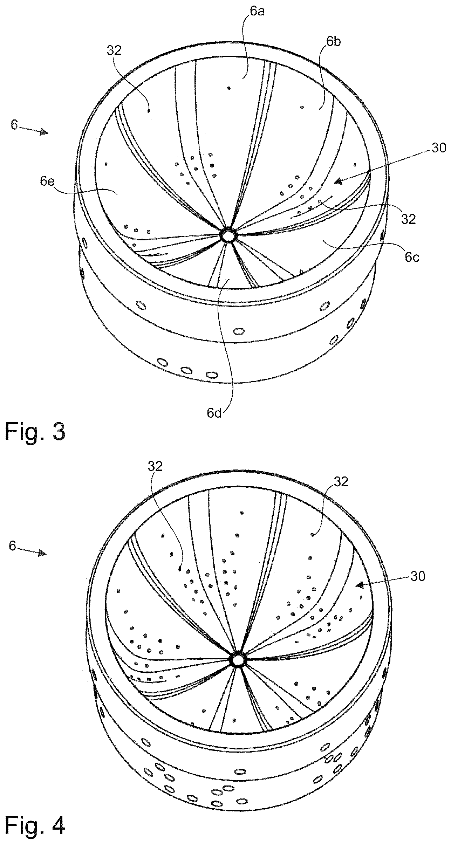

Die folgenden Figuren 3 bis 9 zeigen unterschiedliche Ausgestaltungen von Bodenteilen. Dabei werden zur besseren Übersichtlichkeit nicht jeweils sämtliche Bezugszeichen in den einzelnen Figuren wiederholt.

Figur 3 zeigt eine schematische Darstellung eines erfindungsgemäßen Bodenteils 6. Das Bodenteil weist in dieser Ausführungsform fünf Abschnitte 6a, 6b, 6c, 6d, 6e auf, welche jeweils einen Standbereich ausbilden bzw. zur Ausbildung eines Standbereichs des Kunststoffbehältnisses 20 geeignet und bestimmt sind.

In jedem Standbereich sind dabei eine Vielzahl von Öffnungen 30 ausgebildet, bei welchen es sich hier um Löcher handelt. In dem Ausführungsbeispiel gemäß der Figur 3 sind in jedem Abschnitt 6a, 6b, 6c, 6d, 6e zehn Löcher 32 angeordnet, welche alle den gleichen Durchmesser aufweisen. Insbesondere handelt es sich bei der Figur 3 um ein Bodenteil 6 mit einem Bodendurchmesser von 65 mm mit jeweils zehn Löchern in jedem Abschnitt 6a, 6b, 6c, 6d, 6e, welche einen Durchmesser von 1 mm aufweisen.

Die Figur 4 zeigt eine weitere schematische Darstellung eines erfindungsgemäßen Bodenteils 6. Auch hier sind in jedem Abschnitt wieder Öffnungen 30 vorgesehen, welche aus einer Vielzahl von Löchern 32 bestehen. Im Gegensatz zu der Figur 3 weist hier jeder Abschnitt 24 Löcher 32 auf. Dies deutet daraufhin, dass der Durchmesser des Bodenteils 6 der Figur 4 entweder größer ist als der Durchmesser des Bodenteils der Figur 3 oder die Löcher hier einen kleineren Durchmesser aufweisen als die Löcher in der Figur 3. Insbesondere handelt es sich bei der Figur 4 um ein Bodenteil 6 mit einem Bodendurchmesser von 100 mm mit jeweils 24 Löchern 32 in jedem Abschnitt 6a, 6b, 6c, 6d, 6e, welche einen Durchmesser von 1 mm aufweisen.

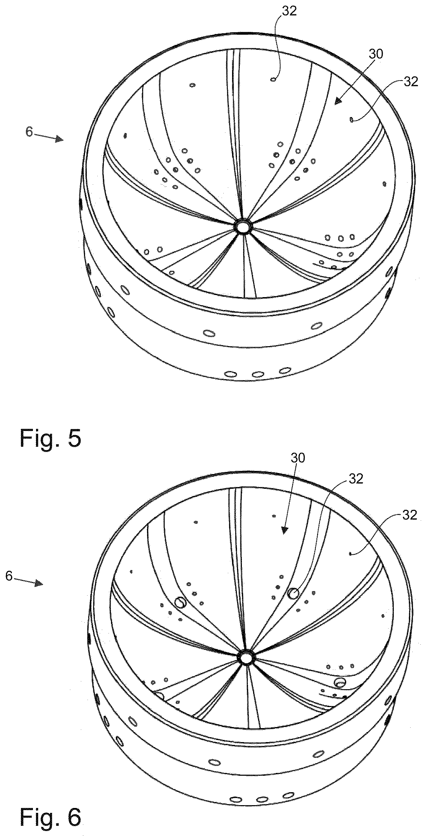

Die Figur 5 zeigt eine weitere schematische Darstellung eines erfindungsgemäßen Bodenteils 6. Auch hier sind jedem Abschnitt des Bodenteils 6 wieder zehn Löcher 32 angeordnet, welche jedoch einen größeren Durchmesser auf sind als die Löcher in dem Bodenteil der Figur 3. insbesondere handelt es sich bei der Figur 5 um ein Bodenteil 6 mit einem Bodendurchmesser von 100 mm mit jeweils zehn Löchern 32 in jedem Abschnitt 6a, 6b, 6c, 6d, 6e, welche einen Durchmesser von 1,5 mm aufweisen.

In der Figur 6 sind in jedem Abschnitt des Bodenteils 6 neun Löcher 32 angeordnet, welche unterschiedliche Durchmesser aufweisen. Insbesondere handelt es sich bei der Figur 6 um ein Bodenteil 6 mit einem Bodendurchmesser von 100 mm mit jeweils neun Löchern 32 in jedem Abschnitt 6a, 6b, 6c, 6d, 6e, wobei acht Löcher einen Durchmesser von 1 mm aufweisen und ein Loch einen Durchmesser von 4 mm.

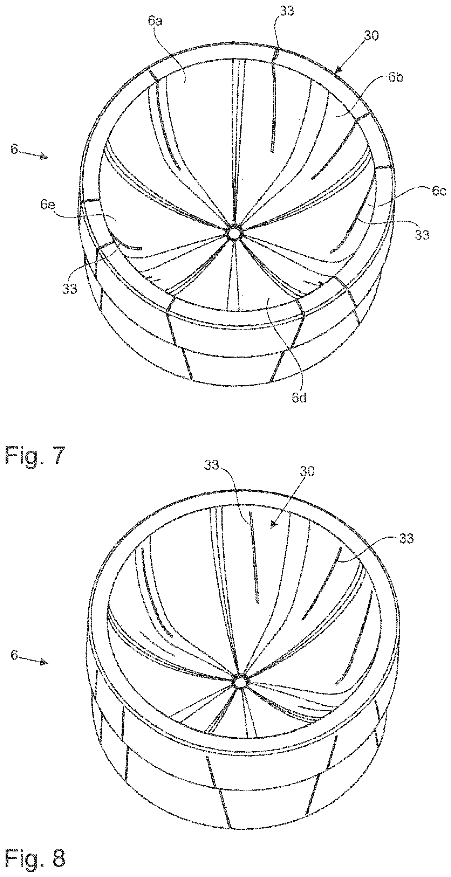

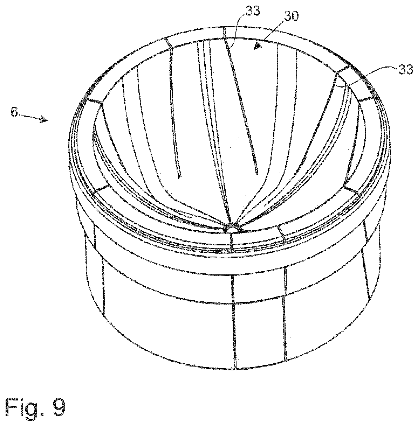

Die Figuren 7-9 zeigen weitere schematische Darstellungen eines erfindungsgemäßen Bodenteils 6. In diesen Ausführungsformen sind in jedem Abschnitt 6a, 6b, 6c, 6d, 6e des Bodenteils 6 Öffnungen 30 angeordnet, welche hier als Schlitze 33 ausgebildet sind. In der Figur 9 ist zusätzlich zur Stabilitätsverbesserung ein Ring an dem Bodenteil 6 angeordnet. Der Ring kann dabei bevorzugt durch Schrumpfen, Schrauben oder Schweißen an dem Außenumfang des Bodenteils 6 angeordnet werden.

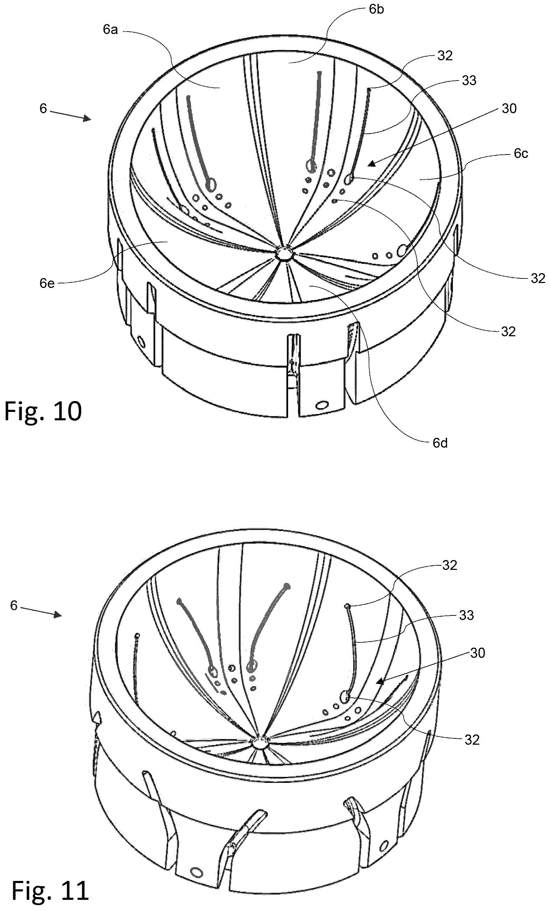

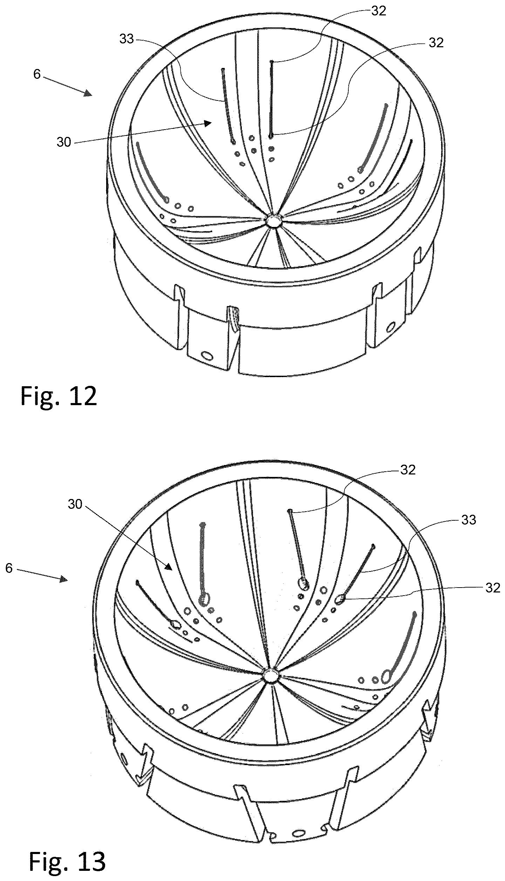

Die Figuren 10-13 zeigen eine weitere Ausführungsform eines erfindungsgemäßen Bodenteils 6, wobei die Öffnungen 30 hier aus einer Kombination von Löchern 32 bzw. Bohrungen und Schlitzen 33 bestehen. Dabei ist erkennbar, dass jeweils an den Enden der Schlitze 33 Löcher 32 angeordnet sind, wobei die Schlitze 33 bevorzugt von Loch 32 zu Loch 32 verlaufen. In dieser Ausführungsform sind dabei in jedem Abschnitt 6a, 6b, 6c, 6d und 6e des Bodenteils 6 zehn Löcher 32 und zwei Schlitze 33 angeordnet.

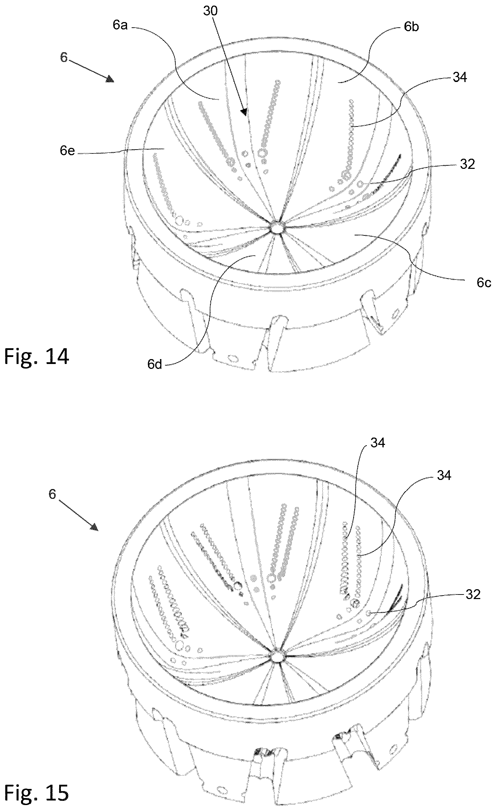

Figur 14 zeigt eine weitere schematische Darstellung eines erfindungsgemäßen Bodenteils 6. In dieser Ausführungsform sind eine Vielzahl von Löcher entlang einer Reihe 34 angeordnet und bilden so eine Art Schlitz aus. Zusätzlich zu diesen in Reihe 34 angeordneten Löchern kann das Bodenteil auch noch weitere Löcher 32 aufweisen. Insbesondere entspricht die Anordnung der Öffnungen 30 in der Figur 14 der Anordnung der Öffnungen 30 in der Figur 10 mit dem Unterschied, dass die in Figur 10 als Schlitze ausgebildeten Öffnungen in der Figur 14 durch eine entlang einer Reihe 34 angeordnete Vielzahl von Löchern ausgebildet wird. Die Bezugszeichen 6a-6e kennzeichnen wieder die einzelnen Abschnitte des Bodenteils 6.

Figur 15 zeigt eine weitere schematische Darstellung eines erfindungsgemäßen Bodenteils 6. Die Figur 15 zeigt eine Ausführungsform, bei welcher zwei Reihen 34, mit jeweils einer Vielzahl von Löchern, parallel nebeneinander angeordnet sind. Auch die Anordnung mehrerer derartiger Reihen wäre denkbar.

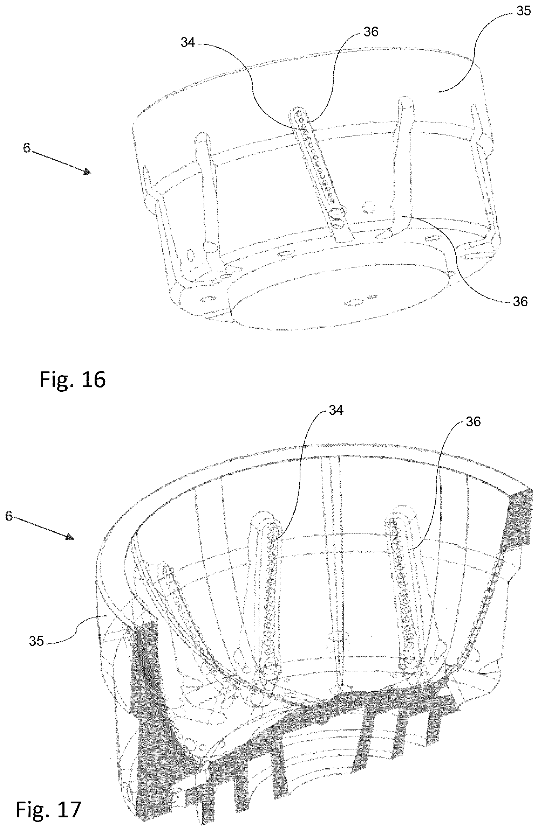

Figur 16 ist eine Außenansicht des in Figur 14 dargestellten Bodenteils 6. Dabei ist erkennbar, dass an der Außenoberfläche 35 des Bodenteils 6 im Bereich der Reihen 34 jeweils ein Kanal 36 ausgebildet ist. Durch diesen Kanal kann das gasförmige Medium schneller aus dem Bodenteil ausgeleitet werden. Der Kanal 36 ist dabei mit einer bezogen auf die Durchmesser der in der Reihe 34 angeordneten Löcher vielfachen Breite ausgebildet.

Figur 17 zeigt eine Schnittdarstellung des in Fig. 14 dargestellten Bodenteils 6. In dieser Darstellung sind insbesondere wieder die in einer Reihe 34 angeordnete Vielzahl von Löchern erkennbar sowie die auf der Außenoberfläche 35 des Bodenteils 6, im Bereich der Reihen 34, angeordneten Kanäle 36.

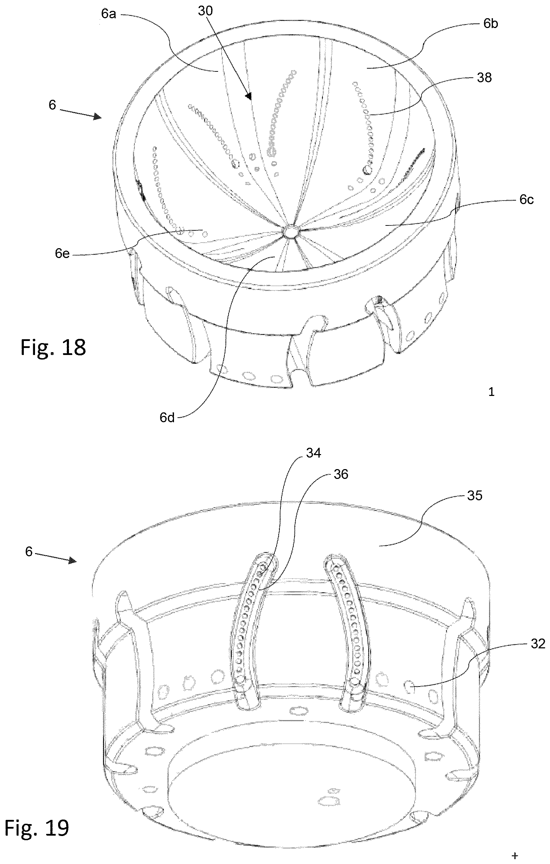

Figur 18 zeigt eine weitere schematische Darstellung eines erfindungsgemäßen Bodenteils 6. In dieser Ausführungsform ist eine Vielzahl von Löchern entlang eines Splines 38 angeordnet. Diese Anordnung der Öffnungen 30 entspricht dabei der Anordnung der Öffnungen 30 in der Figur 11 mit dem Unterschied, dass die in Figur 11 als gekrümmte Schlitze ausgebildeten Öffnungen in der Figur 18 durch eine entlang eines Splines 38 angeordnete Vielzahl von Löchern ausgebildet wird.

Figur 19 ist eine Außenansicht des in Figur 18 dargestellten Bodenteils 6. An der Außenoberfläche 35 des Bodenteils 6 ist hier wieder der Kanal 36 erkennbar, welcher in der Form dem durch die Löcher ausgebildeten Spline 38 entspricht.

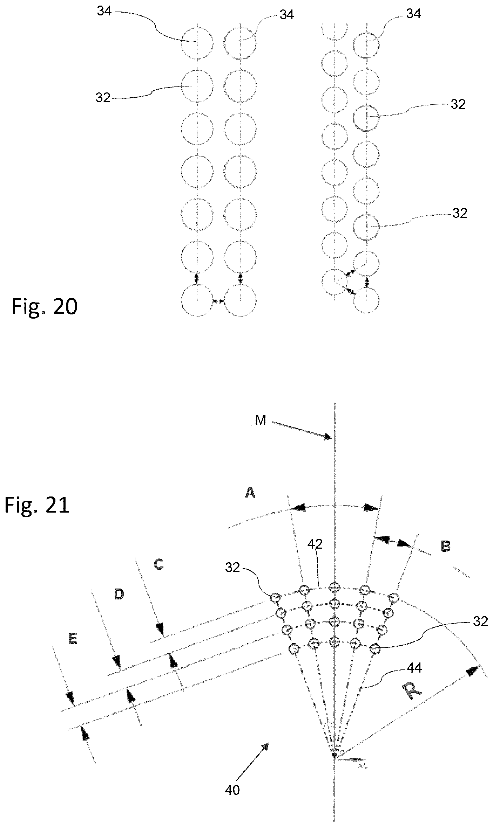

Figur 20 zeigt eine schematische Darstellung einer Anordnung von Löchern 32 in Reihe 34. In der linken Darstellung sind dabei zwei Reihen 34 von Löchern 32 welche, wobei die Löcher 32 hier jeweils auf gleicher Höhe und direkt nebeneinander angeordnet sind. In der rechten Darstellung sind ebenfalls zwei Reihen 34 von Löchern 32 erkennbar, wobei die Löcher 32 hier jedoch versetzt zueinander angeordnet sind. Die kleinen Pfeile kennzeichnen die Abstände der Löcher zueinander, welche gleich oder auch unterschiedlich sein können.

Figur 21 zeigt ein beispielhaftes Bohrbild 40 eines Abschnitts des Bodenteils. Das Bohrbild ist senkrecht zu einer Oberfläche der Bodengeometrie des Bodens und wird bevorzugt bezüglich eines Mittelpunkts M des Bodenteils mittig an dem Standfuß des Bodenteils angeordnet. Die einzelnen Löcher 32 sind dabei hier insbesondere in mehreren Spalten 44 und Zeilen 42 angeordnet. Die Winkel A und B sind dabei von der Breite des Standfußes abhängig. Der Winkel A, welcher sich vom Mittelpunkt M ausgehend jeweils bis auf die jeweilige benachbarte Spalte erstreckt, liegt bevorzugt zwischen 2° und 60°, bevorzugt zwischen 5° und 35° und besonders bevorzugt zwischen 10° und 25°. Der Winkel B zwischen zwei nebeneinander angeordneten Spalten liegt bevorzugt zwischen 0,5° und 30°, bevorzugt zwischen 0,8° und 25° und besonders bevorzugt zwischen 1° und 20°. Bevorzugt kann der Winkel A auch vom Durchmesser des Behältnisses abhängig sein oder in einem Verhältnis X zum Behältnisdurchmesser sein. Das Verhältnis X kann dabei bevorzugt zwischen 0 und 10 liegen.

Das Bezugszeichen R kennzeichnet den Radius des Bodenteils und die Bezugszeichen C-E die Abstände der Löcher entlang einer Reihe bzw. Spalte 44. Der Radius R steht dabei bevorzugt entweder in einem Verhältnis RD zum Behältnisdurchmesser oder in einem Verhältnis RS zu einem Standkreisdurchmesser des Bodens. Das Verhältnis RD kann sich zwischen 0 und 1 bewegen, bevorzugt zwischen 0,25 und 0,90. Das Verhältnis RS kann sich zwischen 0 und 2 bewegen, bevorzugt zwischen 0,5 und 1,5.

Die Abstände C, D und E stehen bevorzugt in einem Verhältnis RA zum Radius R. Die Abstände C, D und E haben bevorzugt alle das gleiche Verhältnis zu dem Radius R. Es ist aber denkbar, dass die Maße C, D und E in unterschiedlichen Verhältnissen zu dem Radius R stehen.
Zum Beispiel der Abstand C: C = RAC *R
Zum Beispiel der Abstand D: D = RAD *R
Zum Beispiel der Abstand E: E = RAE *R

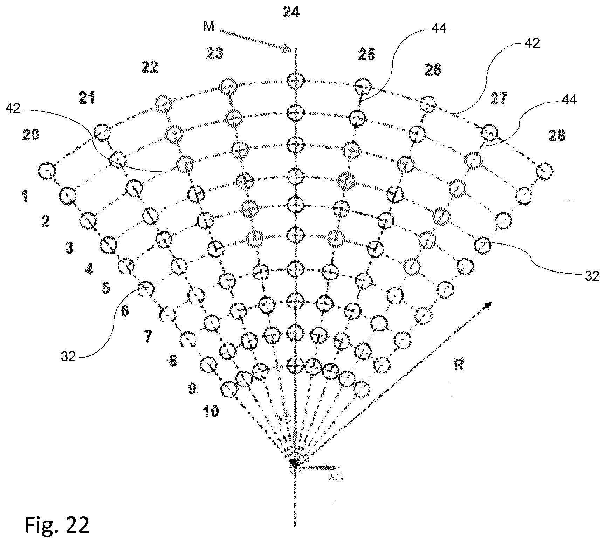

Figur 22 zeigt ein weiteres beispielhaftes Bohrbild 40 eines Abschnitts des Bodenteils. Die einzelnen Löcher 23 sind hier wiederum in mehreren Spalten 44 und Zeilen 42 angeordnet, wobei die Spalten 44 mit den Nummern 20-28 gekennzeichnet sind und die Zeilen mit den Nummern 1-10. Die Spalten 44 sind dabei bevorzug in radialer Richtung zu einem Mittelpunkt M des Bodenteils angeordnet und die Zeilen 42 in Umfangsrichtung des Bodenteils.

Die einzelnen Löcher 32 innerhalb eines Bohrbilds 40 können bevorzugt einen gleichen Durchmesser aufweisen oder einen unterschiedlichen Durchmesser. Die Löcher 32 stehen dabei, wenn sie unterschiedlich groß sind, bevorzugt in einem Verhältnis BD zueinander, welches zwischen 0,25 und 10, bevorzugt zwischen 0,5 und 6 liegt.

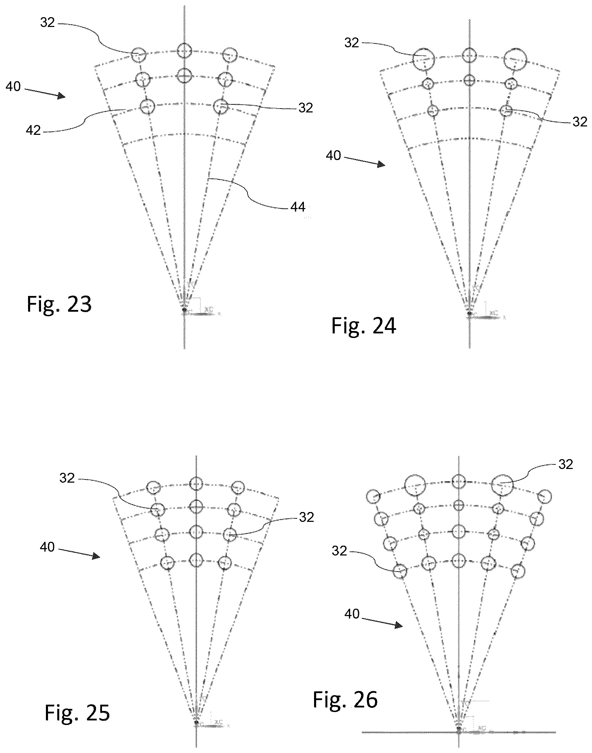

Die Figuren 23-26 zeigen weitere beispielhafte Bohrbilder 40 eines Abschnitts des Bodenteils. Auch hier ist wieder eine Vielzahl von Löchern 32 in mehreren Spalten 44 und Zeilen 42 angeordnet. Das jeweilige Bohrbild 40 kann dabei aus einer beliebigen Anzahl von Löchern 32 bestehen, welche entweder gleiche oder unterschiedliche Durchmesser aufweisen.

### Bezugszeichenliste

- 1: Blasform
- 2, 4: Seitenteile
- 6: Bodenteil
- 6a-6e: Abschnitte des Bodenteils
- 10: Kunststoffvorformlinge
- 12, 14: Trägerschalen
- 18: Hohlraum
- 20: Kunststoffbehältnisse
- 22, 24: Blasformträger
- 30: Öffnungen
- 32: Loch, Bohrung
- 33: Schlitz
- 34: Reihe
- 35: Außenoberfläche
- 36: Kanal
- 38: Spline
- 40: Bohrbild
- 42: Zeilen
- 44: Spalten
- 50: Umformungseinrichtung
- 52: Umformungsstation
- 54: drehbarer Träger
- 55: Zuführeinrichtung
- 57: Abführstern
- 60: Unterdruckerzeugungseinrichtung

- A: Winkel
- B: Winkel
- C: Abstand
- D: Abstand
- E: Abstand
- M: Mittelpunktlinie des Abschnitts
- R: Radius

## Patentansprüche

1. Blasform (1) zum Umformen von Kunststoffvorformlingen (10) zu Kunststoffbehältnissen (20) mit wenigstens zwei Blasformseitenteilen (2, 4) und einem Bodenteil (6), welche einen Hohlraum (18) ausbilden, innerhalb dessen Kunststoffvorformlinge (10) durch Beaufschlagung mit einem fließfähigen Medium zu den Kunststoffbehältnissen (20) umformbar sind, wobei eine den Hohlraum (18) begrenzende Innenwandung der Blasformseitenteile (2, 4) und des Bodenteils (6) eine Kontur aufweist, welche eine vorgegebene Gestalt der herzustellenden Kunststoffbehältnisse (20) erzeugt, wobei in wenigstens einem Abschnitt (6a, 6b, 6c, 6d) des Bodenteils (6) eine Vielzahl von Öffnungen (30) vorgesehen ist, welche ein Abführen eines gasförmigen Mediums während eines Expansionsvorgangs des Kunststoffbehältnisses ermöglichen, **dadurch gekennzeichnet, dass**
ein Verhältnis zwischen einer Oberfläche des Bodenteils (6) und einer Oberfläche der Öffnungen (30) bei 35-175 liegt und das Verhältnis von einer Größe des Kunststoffbehältnisses und einer Form der Öffnungen abhängt.

2. Blasform (1) nach Anspruch 1,
**dadurch gekennzeichnet, dass**
ein Durchmesser des Bodenteils (6) zwischen 50 mm und 200 mm liegt und die Oberfläche der Öffnungen (30) zwischen 23 mm² und 500 mm².

3. Blasform (1) nach Anspruch 1,
**dadurch gekennzeichnet, dass**
die Oberfläche des Bodenteils (6) zwischen 3900 mm² und 65000 mm² liegt und die Oberfläche der Öffnungen (30) zwischen 23 mm² und 500 mm².

4. Blasform (1) nach Anspruch 1,
**dadurch gekennzeichnet, dass**
es sich bei den Öffnungen (30) um eine Vielzahl von Löchern (32) und/oder Schlitzen (33) handelt, welche in dem Bodenteil (6) angeordnet ist.

5. Blasform (1) nach Anspruch 1,
**dadurch gekennzeichnet, dass**
das Bodenteil (6) zur Ausbildung von Standfüßen des Kunststoffbehältnisses (20) ausgebildet ist, wobei jeder Standfuß eine Vielzahl von Öffnungen (30) aufweist.

6. Blasform (1) nach Anspruch 5,
**dadurch gekennzeichnet, dass**
jeder Standfuß 7 - 35 Öffnungen (30), bevorzugt 8 - 30 Öffnungen (30) und besonders bevorzugt 10 - 25 Öffnungen (30) aufweist.

7. Blasform (1) nach Anspruch 4,
**dadurch gekennzeichnet, dass**
wenigstens ein Loch (32) einen Durchmesser aufweist, der zwischen 0,5 mm und 4 mm, bevorzugt zwischen 0,8 mm und 2 mm liegt.

8. Blasform (1) nach Anspruch 4,
**dadurch gekennzeichnet, dass**
wenigstens ein Schlitz (33) eine Breite aufweist, die zwischen 0,4 mm und 2 mm, bevorzugt zwischen 0,5 mm und 1 mm und besonders bevorzugt zwischen 0,6 mm und 0,8mm liegt.

9. Bodenteil (6) für eine Blasform (1) zum Umformen von Kunststoffvorformlingen zu Kunststoffbehältnissen (20) nach den Ansprüchen 1-8, wobei das Bodenteil (6) eine Innenwandung mit einer Kontur aufweist, welche eine vorgegebene Bodengestalt der herzustellenden Kunststoffbehältnisse (20) erzeugt, wobei in wenigstens einem Abschnitt (6a, 6b, 6c, 6d) des Bodenteils (6) eine Vielzahl von Öffnungen (30) vorgesehen ist, welche ein Abführen eines gasförmigen Mediums während eines Expansionsvorgangs des Kunststoffbehältnisses (20) ermöglichen,
**dadurch gekennzeichnet, dass**
ein Verhältnis zwischen einer Oberfläche des Bodenteils (6) und einer Oberfläche der Öffnungen (30) bei 35-175 liegt und das Verhältnis von einer Größe des Kunststoffbehältnisses und einer Form der Öffnungen abhängt.

## Claims

1. Blow mould (1) for forming plastic preforms (10) into plastic containers (20), having at least two blow mould side parts (2, 4) and a bottom part (6), which form a cavity (18), within which plastic preforms (10) are formed into the plastic containers (20) by being acted upon by a flowable medium, wherein an inner wall of the blow mould side parts (2, 4) and of the bottom part (6) which delimits the cavity (18) has a contour which produces a predetermined shape of the plastic containers (20) to be produced, wherein a plurality of openings (30) being provided in at least one section (6a, 6b, 6c, 6d) of the bottom part (6), which openings allow a gaseous medium to be discharged during an expansion process of the plastic container,
**characterised in that**
a ratio between a surface area of the bottom part (6) and a surface area of the openings (30) is 35-175 and a ratio depends on a size of the plastic containers and a shape of the openings.

2. Blow mould (1) according to claim 1,
**characterised in that**
a diameter of the bottom part (6) is between 50 mm and 200 mm and the surface of the openings (30) is between 23 mm² and 500 mm².

3. Blow mould (1) according to claim 1,
**characterised in that**
the surface of the bottom part (6) is between 3900 mm² and 65000 mm² and the surface of the openings (30) is between 23 mm² and 500 mm².

4. Blow mould (1) according to claim 1,
**characterised in that**
the openings (30) are a plurality of holes (32) and/or slots (33) arranged in the bottom part (6).

5. Blow mould (1) according to claim 1,
**characterised in that**
the bottom part (6) is designed to form standing feet of the plastic container (20), wherein each standing foot having a plurality of openings (30).

6. Blow mould (1) according to claim 5,
**characterised in that**
each standing foot has 7 - 35 openings (30), preferably 8 - 30 openings (30) and particularly preferably 10 - 25 openings (30).

7. Blow mould (1) according to claim 4,
**characterised in that**
at least one hole (32) has a diameter which is between 0.5 mm and 4 mm, preferably between 0.8 mm and 2 mm.

8. Blow mould (1) according to claim 4,
**characterised in that**
at least one slot (33) has a width which is between 0.4 mm and 2 mm, preferably between 0.5 mm and 1 mm and particularly preferably between 0.6 mm and 0.8 mm.

9. Bottom part (6) for a blow mould (1) for forming plastic preforms into plastic containers (20) according to claims 1-8, wherein the bottom part (6) has an inner wall with a contour which produces a predetermined bottom shape of the plastic containers (20) to be produced, wherein in at least one section (6a, 6b, 6c, 6d) of the bottom part (6) a plurality of openings (30) is provided which allow a gaseous medium to be discharged during an expansion process of the plastic container (20), **characterised in that**
a ratio between a surface area of the bottom part (6) and a surface area of the openings (30) is 35-175 and a ratio depends on a size of the plastic containers and a shape of the openings.

## Revendications

1. Moule de soufflage (1) pour la formation de préformes en matière plastique (10) en récipients en matière plastique (20) avec au moins deux parties latérales de moule de soufflage (2, 4) et une partie de fond (6) qui réalisent une cavité (18), à l'intérieur de laquelle des préformes en matière plastique (10) sont formables par alimentation en un milieu coulant en récipients en matière plastique (20), dans lequel une paroi intérieure délimitant la cavité (18) des parties latérales de moule de soufflage (2, 4) et de la partie de fond (6) présente un contour qui génère une forme prédéfinie des récipients en matière plastique (20) à fabriquer, dans lequel une pluralité d'ouvertures (30) est prévue dans au moins une section (6a, 6b, 6c, 6d) de la partie de fond (6), lesquelles permettent une évacuation d'un milieu gazeux pendant un processus d'expansion du récipient en matière plastique,
**caractérisé en ce que**
un rapport entre une surface de la partie de fond (6) et une surface des ouvertures (30) se situe entre 35 et 175 et le rapport dépend d'une grandeur du récipient en matière plastique et d'une forme des ouvertures.

2. Moule de soufflage (1) selon la revendication 1,
**caractérisé en ce que**
un diamètre de la partie de fond (6) se situe entre 50 mm et 200 mm et la surface des ouvertures (30) entre 23 mm² et 500 mm².

3. Moule de soufflage (1) selon la revendication 1,
**caractérisé en ce que**
la surface de la partie de fond (6) se situe entre 3900 mm² et 65 000 mm² et la surface des ouvertures (30) entre 23 mm² et 500 mm².

4. Moule de soufflage (1) selon la revendication 1,
**caractérisé en ce que**
il s'agit pour les ouvertures (30) d'une pluralité de trous (32) et/ou de fentes (33) qui est agencée dans la partie de fond (6).

5. Moule de soufflage (1) selon la revendication 1,
**caractérisé en ce que**
la partie de fond (6) est réalisée pour la réalisation de pieds d'appui du récipient en matière plastique (20), dans lequel chaque pied d'appui présente une pluralité d'ouvertures (30).

6. Moule de soufflage (1) selon la revendication 5,
**caractérisé en ce que**
chaque pied d'appui présente 7 à 35 ouvertures (30), de préférence 8 à 30 ouvertures (30) et de manière particulièrement préférée 10 à 25 ouvertures (30).

7. Moule de soufflage (1) selon la revendication 4,
**caractérisé en ce que**
au moins un trou (32) présente un diamètre qui se situe entre 0,5 mm et 4 mm, de préférence entre 0,8 mm et 2 mm.

8. Moule de soufflage (1) selon la revendication 4,
**caractérisé en ce que**
au moins une fente (33) présente une largeur qui se situe entre 0,4 mm et 2 mm, de préférence entre 0,5 mm et 1 mm et de manière particulièrement préférée entre 0,6 mm et 0,8 mm.

9. Partie de fond (6) pour un moule de soufflage (1) pour la formation de préformes en matière plastique en récipients en matière plastique (20) selon les revendications 1 à 8, dans laquelle la partie de fond (6) présente une paroi intérieure avec un contour qui génère une forme de fond prédéfinie des récipients en matière plastique (20) à fabriquer, dans laquelle une pluralité d'ouvertures (30) est prévue dans au moins une section (6a, 6b, 6c, 6d) de la partie de fond (6), lesquelles permettent une évacuation d'un milieu gazeux pendant un processus d'expansion du récipient en matière plastique (20),
**caractérisée en ce que**
un rapport entre une surface de la partie de fond (6) et une surface des ouvertures (30) se situe entre 35 et 175 et le rapport dépend d'une grandeur du récipient en matière plastique et d'une forme des ouvertures.
